Europäisches Patentamt

European Patent Office

Office européen des brevets

(11) Publication number: **0 128 773**
A2

# EUROPEAN PATENT APPLICATION

(21) Application number: 84303950.4

(51) Int. Cl.³: **B 65 D 83/14**

(22) Date of filing: 12.06.84

(30) Priority: 13.06.83 US 503624

(43) Date of publication of application: 19.12.84
Bulletin 84/51

(84) Designated Contracting States: AT BE CH DE FR GB IT
LI LU NL SE

(71) Applicant: Scheindel Associates, Inc., Randolph Center
Vermont 05061 (US)

(72) Inventor: Scheindel, Christian Theodor, Star Route -
Ridge Road, Randolph Center Vermont 05061 (US)
Inventor: Bartoszek, Joseph Edward, Sargent Road,
Tunbridge Vermont 05077 (US)

(74) Representative: Arthur, George Fitzgerald et al,
KILBURN & STRODE 30, John Street, London WC1N 2DD
(GB)

(54) Pressure operated dispensing container.

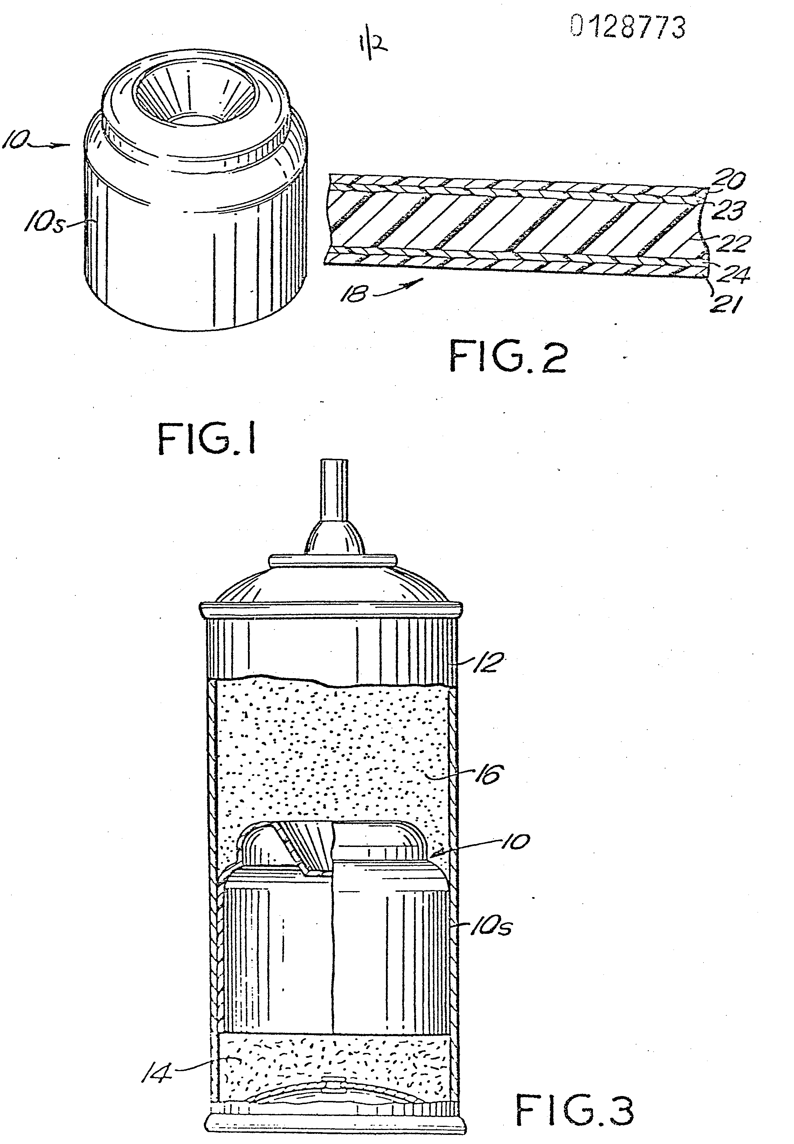

(57) In a pressure operated dispensing container (12) common-
ly called an aerosol container, a floating piston (10) is provided
to separate the propellant chamber (14) from the product
chamber (16). To provide combined properties such as imper-
meability and neutrality to the absorption and adsorption of
water, the piston provided is thermoformed from a multi-ply
sheet material (Figure 2) having an impermeable centre layer
(22) of nitrile polymer sandwiched between two shielding
layers (20, 21) of polypropylene. The thermoformed piston
has thin side walls (105) providing a close fit to the can wall,
conformance to out of round conditions, and minimum swell-
ing. The thermoforming of the piston makes it possible among
other things to employ a simple, less expensive fabricating
technique that required less material than does injection
moulding.

# PRESSURE OPERATED DISPENSING CONTAINER

This invention relates in general to those types of pressure operated dispensing containers which are usually called aerosol containers and particularly to an improved piston construction for such a container.

The use of a piston in an aerosol container is a well known technique for separating the material to be dispensed from the propellant. Aerosol containers having pistons have been used since at least 1960. The material of the piston forms a barrier between the propellant and the material being dispensed. The barrier properties required for the piston are a function of the material being dispensed and to some extent also a function of the propellant. It is important that the product being dispensed be unadulterated and contain none of the propellant. Various piston materials and designs have been proposed and used to avoid permeation of the propellant through the piston into the product and also to avoid by-pass around the piston of the propellant into the product. The by-pass of propellant is also known as secondary permeation.

Some dispensed products must be kept free of moisture for various reasons. For example silicone sealant tends to cure when exposed to moisture and thus it is important that the piston be a material that neither adsorbs nor absorbs moisture if the product is a silicone

In general, it is important that the barrier properties of the piston be effective to block gas transmission from the propellant, often a nitrogen propellant, so as to avoid such undesirable results as foaming of the product, loss of pressure and product adulteration in general.

Furthermore, it is important that the material employed for the piston be of reasonable cost so that the cost of the package, specifically the container, is commensurate with the value or cost of the product being dispensed.

Accordingly there is considerable tradeoff in selection of piston materials between various characteristics of gas impermeability, neutrality to moisture, adequate rigidity, adequate flexibility, low cost, avoidance of swelling and chemical stability.

The dispensing of silicone sealant from an aerosol container has posed particular problems and one solution involved the use of an aluminum pouch in an aluminum can so as to provide the required isolation between the nitrogen propellant and the silicone sealant while avoiding the curing of the silicone due to moisture absorption. The cost of this solution to the problem limits its commercial use.

Approaches such as the use of an impermeable aluminium pouch within the can tend to be unacceptable because of the risk of having the neck of the bag pinched by the propellant in such a fashion as to prevent ready dispensing of the desired product.

Accordingly, it is a purpose of this invention to met the above objective in a cost effective fashion which avoids generating new or additional problems and which provides an aerosol dispenser that is reliable and effective over an acceptably long period of use and shelf life.

In general, in accordance with the invention, a piston in or for, a pressure operated product dispensing container has any one, or any combination of, the following features:-

a) the piston may be thermoformed from sheet material;

b) the piston may be formed from multi-ply material;

c) the piston may have one gas-impermeable layer, and one layer for shielding the gas-impermeable layer from the product, or from the propellant, or both;

d) the piston may be formed with a long thin-walled skirt

e) the piston may be formed with a cylindrical skirt.

In more detail, according to one aspect of this invention a sheet of a highly impervious material such as a nitrile polymer, is formed into an appropriate piston by a thermoforming process rather than by an injection molding process. The result is a thin wall, conforming piston that has miminum propellant permeation and minimum propellant by-pass. When used to dispense a low viscosity material such as a cosmetic gel or lotion, the piston can be made to provide a miminal gap between piston side wall and can wall. The thin side wall of the piston assures conformance to the can wall and minimizes piston swelling and thus increases shelf life.

According to a second aspect, the material out of which the piston is thermoformed is a multi-ply sheet in which the nitrile polymer is sandwiched between two layers of a moisture neutral material such as polypropylene. When used with a silicone sealant material, the middle layer acts as an effective barrier to the transmission of nitrogen propellant thereby avoiding foaming and loss of pressure and keeping the material to be dispensed clear. The two outer layers assure that moisture is not collected thereby increasing the shelf life of the silicone sealant in the can by reducing exposure of the material to water and thus minimizing the rate at which the silicone sealant cures.

This three layer material, includes, as is known in the art, adhesive or tie layers between the three significant operative layers mentioned above.

5. The thermoformed pistons so provided are a particularly effective improvement in the trade-off of the characteristics of avoiding primary and secondary propellant permeability, providing structural integrity, permiting conformance to variations in can roundness, low cost and minimizing piston swelling.

## Brief Description Of The Figures

FIG. 1 is a perspective view of a piston of this invention.

FIG. 2 is a cross-sectional view of the multi-ply sheet material used to form one embodiment of the FIG. 1 piston.

FIG. 3 is a schematic cross-sectional view showing the piston of this invention within an aerosol can.

FIG. 4 is a cross sectional view through the thermoforming apparatus (female mold and male assist) illustrating the thermoforming technique of fabricating the FIG. 1 piston. In FIG. 4, the mold 30 and assist 32 are annular in form.

## Description Of The Preferred Embodiments

With reference to the FIGS., a piston 10 for an aerosol can is shown in FIG. 1. This piston 10 is positioned within an aerosol can 12 with the propellant on the concave side of the piston while the material to be dispensed is on the convex side of the piston 10.

A presently preferred piston 10 is made from a sheet material 18 as shown in FIG. 2. The sheet 18 has five plies. In one embodiment, the outer plies 20 and 21 are a polypropylene that is about 0.127mm (5mils) thick. A central ply 22 is a nitrile polymer that is approximately 0.455mm (18 mils) thick. These primary functioning plies 20, 21 and 22 are adhered together by tie layers 23, 24 which are approximately 0.038mm (1.5 mil) thick layers of known adhesive materials, typically a rubber plastic compound. This sheet 18 is a co-extruded material and has a total thickness of 0.787mm (31 mils).

The piston 10 is a floating piston whose position is determined by release of the contents in the chamber 16. In one application of this invention, an acetoxy cure silicone sealant material is in the upper chamber 16 and a nitrogen propellant is in the lower chamber 14.

The silicone sealant product is one that is particularly sensitive to moisture in that any amount of water will cause the material to cure. Upon curing the material will acquire a resilient rubbery texture. It

0128773

-8-

cures in the manner of an adhesive as contrasted with its viscous fluid nature prior to curing. In addition, the structure of this silicone material is such that it facilitates the permeation of any of the nitrogen propellant gas which might permeate through the wall of the piston. Thus this silicone sealing material is much more sensitive to degradation from the propellant gases than is, for example, a high solid content acrylic latex caulk.

Because this product is sensitive to moisture, the material of which the piston is composed should neither absorb, adsorb nor transmit moisture. Of the materials presently available polypropylene is a cost effective choice. However, polypropylene is not a good barrier to the propellant gas and if polypropylene were used alone, the silicone sealant would soon be adulterated by permeation of the nitrogen gas through the polypropylene piston. There are available nitrile polymer materials which are effective to prevent permeation of these gasses. But such nitrile polymer materials tend to collect or contain a significant amount of moisture so that contact between a nitrile polymer piston and the silicone sealant will tend to cause the sealant to cure in the can.

Where used to dispense a silicone sealant, the piston 10 has a relationship to the sidewall of the can 12 that is looser than slip fit. This permits the material, in this case the silicone sealant, under the pressure developed to extend down along the gap between the sidewall of the piston 10 and the sidewall of the can 12. This provides a seal between the chambers 14 and 16 and also provides a fluid base on which the piston 10 can ride as the material in the chamber 14 is dispensed.

The pistons employed in aerosol containers have been manufactured by injection molding of the plastic material employed. What applicant has come to recognize is that the nature and shape of these pistons is such that they can be formed by a thermoforming process, a species of which is vacuum forming. That is, the method of making these pistons is advantageously one where a differential pressure is employed to conform the heated plastic sheet material around a form.

One advantage of this thermoforming, or differential pressure forming, approach is a substantial savings in cost. Cost savings occur because of the less expensive manufacturing equipment and technique. Another cost saving arises out of the ability to form a thinner wall piston than by injection molding, therefore saving material.

A further advantage of achieving a thin wall piston is that it conforms better to the interior circumference of the can within which the piston operates. In particular, certain cans are formed with a slight flat along the line where the can is seamed. A thin wall piston will conform better to this flat and thus the risk of by pass of the propellant gasses into the product to be dispensed is substantially reduced.

In addition, certain can bodies such as, for example, drawn aluminum or drawn iron are fabricated with a slight taper of, for example, one degree. Having a thin wall piston permits conforming to a slightly tapered inner wall much more than would be the case with a thicker and thus less flexible piston wall.

Finally, by thermoforming the piston instead of injecting molding the piston, it is possible to provide a piston with a substantially straight side wall. The straight side wall tends to create a contact surface between the piston and the can body rather than a contact line and thus tends to substantially reduce secondary permeation.

More particularly, in one embodiment where silicone sealant is the material to be dispensed, a piston 10 having an outside diameter of approximately 52.2mm (2.056 inches) is used in a can 12 having a nominal inner diameter of 52.4mm (2.063 inches). The approximately 0.10mm (3.9 mils) gap between piston 10 and can 12 is filled with the sealant thereby preventing the nitrogen gas under pressure from bypassing the piston and also providing a fluid base which is effectively a lubricant on which the piston can ride as the silicone sealant is dispensed. In that embodiment, it is preferable that the sidewall 10s of the piston 10 be substantially straight, that is be an untapered cylinder. An approximately 25mm (one inch) skirt length provides the necessary sealing surface.

In some embodiments, a slight taper of about $1^0$ may be incorporated in the piston sidewall so that the lower edge of the piston contacts the wall of the can. Thus the fit on the piston 10 ranges from a line contact relationship to one where a predetermined gap is provided. The particular dimensional relationship between piston 10 and can 12 is a function of a number of things including the viscosity of the material dispensed, the pressure available in the propellant chamber 14 and the valve opening desired or required. Piston sizing and piston shape can then be selected to provide an optimum trade-off between propellant by-pass and piston binding against the wall of the can.

Polypropylene is selected for the plies 20, 21 of the sheet material used for the piston 10 because it is moisture neutral in that it neither absorbs nor adsorbs moisture. Accordingly, a concentration of moisture adjacent to the material to be dispensed is avoided. For the purpose of the silicone sealant material this is important to prevent the material from curing in the can. Nitrile polymer is selected for the ply 22 because it is imperveous to the propellant, which in the embodiment being described is nitrogen gas under pressure. Because it is imperveous, it prevents the propellant from seeping into the upper chamber 14 and this prevents the undesired foaming action that might otherwise occur with the silicone material to be dispensed.

The nitrile polymer ply 22 is as relatively thick as possible because the thicker it is, the more effective it can act as a gas barrier. By contrast the water neutral outer plies 20, 21 are relatively thin because their primary function is as a protective coat on the nitrile polymer ply to prevent water adsorption. All that is necessary for that function to occur is a coating layer of the appropriate material such as polypropylene. Accordingly as indicated in FIG. 2, it is preferable that the gas barrier ply 22 be at least three times the thickness of either of the water neutral plies 20, 21. A nominal piston side wall thickness of about 0.50mm (20 mils) was employed.

In a second embodiment where relatively low viscosity (for example 25,000 centipoise) cosmetic gel or lotion is to be dispensed, the piston is formed to have a much thinner sidewall thickness; for example about 0.25mm (10 mils). This thin sidewall substantially reduces the effect of any swelling of the piston due to absorption of moisture and thus permits dimensioning the piston so that the gap between the piston wall and the can wall can be as little as 0.013mm (0.5 mils). A skirt length of approximately 25mm (1 inch) provides the desired surface sealing area. The sidewall should preferably have no taper to it in order to assure a maximum sealing area and the minimum amount of secondary permeation. Accordingly, by providing a thin wall piston, which can only be generated by a thermoforming process, one is able to simultaneously solve the problem of minimizing secondary permeation and avoid the swelling that would decrease the shelf life of the product.

Furthermore, the swell gaps in combination with the 25mm skirt 10s assumes that the piston 10 will retain its alignment in the can 12.

In that embodiment, the piston diameter is approximately 52mm (2.05 inches) and the material out of which the piston is made is a mono-layer nitrile polymer.

It might be noted that this cosmetic gel has a viscosity of about 25,000 centipoise while the silicone sealant has a viscosity of about 225,000 centipoise.

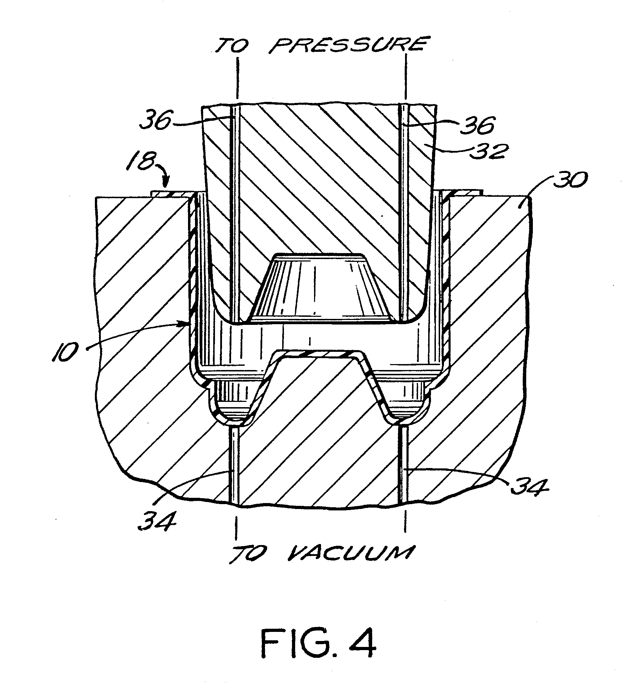

FIG. 4 illustrates the thermoforming technique which is used to fabricate the FIG. 1 piston. Prior art pistons have been injection molded. However, it has been found that a thermoforming technique can be employed to fabricate these pistons and that there are cost and structural advantages to doing so.

As shown FIG. 4, a mold member 30 determines and defines the outer shape of the piston 10. A mold assist 32 provides the means of ensuring that the appropriate pressure differential is applied to the heated sheet material 18 used to form the piston 10. In this thermoforming technique, the differential pressure can be generated by either applying a vacuum through the vents 34 in the female mold 30, or by applying air under pressure through the vents 36 in the male assist mold 32, or both.

-14-

One of the advantages of this thermoforming technique is that it saves on the cost of both mold equipment and the cost of materials. The cost of materials is reduced because the thickness of the wall structure can be substantially less than if injection molding were employed to create the piston 10. For example a 1.5mm (60 mil) sheet 18 is used and the resultant piston has a wall thickness which, though it varies along the wall, is about 0.5mm (20 mils).

In addition, thermoforming permits fabricating a piston 10 in which the sidewall 10s is essentially straight. In an injection molded piston, the sidewall must be tapered slightly so as to permit removal of the piston from the mold. But in thermoforming, reverse pressure through the ports or vents 34 will free the molded piston from the mold 30 and thus a taper is not necessary. By having a straight sidewall 10s, the gap between the wall of the piston and the wall of the can 12 can be kept to the mimimum tolerance desired or required throughout the zone of the sidewall 10s. This enhances the sealing between the two chambers 14 and 16 and reduces the extent of migration of propellant gas in the chamber 14 around the outside of the sidewall 10s into the product containing chamber 16.

CLAIMS

1.    In a pressure operated container for the dispensing of a product, a piston having a substantial side wall, said wall being thin enough to at least partially conform to flats and other normal irregularities of the container body, and preferably also to keep the swelling from absorption of moisture low enough to maintain a gap between piston side wall and container side wall, said side wall being long enough to substantially prevent secondary migration of propellant into the product to be dispensed and also long enough to maintain alignment of the piston within the container body as the piston rides up along the interior of the container wall.

2.    A piston as claimed in Claim 1 which has been thermoformed.

3.    A piston as claimed in Claim 1 or Claim 2 formed from nitrile polymer or having a substantial component of nitrile polymer.

4.    In a pressure operated container for the dispensing of a product, a piston comprising a composite piston body having a first layer of a gas impermeable material and a second layer - preferably of a water neutral material as a shield between said gas impermeable material and the material to be dispensed from said container, and possibly a third shield layer on the other face of the first layer.

0128773

5.    A piston as claimed in Claim 4 wherein the material of said first layer is a nitrile polymer and the material of the shield layer or layers is polypropylene material.

6.    A piston as claimed in Claim 5 wherein said first layer is at least three times as thick as either the second layer or the third layer.

7.    The method of manufacturing a piston for use in a pressure operated container for the dispensing of a product comprising the steps of: providing a multiply sheet of material having at least a first ply of a gas impermeable material and a second ply of material adapted to shield said gas impermeable ply, and thermoforming the piston from said sheet of material said second ply being outboard of said first ply in said piston.

8.    The method of manufacturing a piston for use in a pressure operated container for the dispensing of a product comprising the steps of: providing the piston material as a sheet of thermoplastic and thermoforming said sheet to create the piston of a desired configuration and size.

9.    The method of Claim 7 or Claim 8 wherein the thickness of the sidewall of said piston is substantially less than the thickness of said sheet.

10.     A piston made by a method as claimed in any of Claims 7 to 9.

0128773

FIG.1

10

10s

FIG.2

20
23
22
24
21

18

12

12

16

10

10s

14

FIG.3

FIG. 4